# EUROPEAN PATENT APPLICATION

(11) **EP 1 398 987 A1**
(43) Date of publication of application: **17.03.2004**
(21) Application number: 02020317.0
(22) Date of filing: 11.09.2002
(51) Int. Cl.: H04Q 7/38, H04B 10/10

(54) **Wireless communication system with mobile radio transceivers selection function**

(71) Applicant: Sony International (Europe) GmbH, 10785 Berlin (DE)
(72) Inventor: Uno, Masahiro, c/o Advanced Technology Center Stg., 70327 Stuttgart (DE)
(74) Representative: Rupp, Christian, Dipl.Phys.

(57) **Abstract**

The underlying invention refers to mobile radio transceivers (705,701) equipped with an optical wireless transmitter or receiver. A first mobile radio transceiver (705) comprising an encoder which generates a signal for the optical beacon transmitter (706), and a second mobile radio transceiver (701) comprises an iptical beacon receiver (702), which receives the optical signal pattern generated by said optical beacon transmitter (706), and a decoder (511) which decodes the received optical signal pattern in order to enable the user (102) of the second mobile radio transceiver (701) to easily select other mobile radio transceivers (705) equipped with optical wireless transmitters (706) and to clearly and visibly recognize which mobile radio transceiver has been selected. Instead of a visible light emitting LED (704), a buzzer or a speaker may optionally be used to enable said user (102) to recognize the selected mobile radio transceiver (705) by hearing a specific sound.

## Description

### FIELD AND BACKGROUND OF THE INVENTION

The underlying invention generally relates to the field of mobile computing, wireless communication, and mobile communication networks with high-speed access. It particularly refers to mobile radio transceivers equipped with optical wireless transceivers using infrared light emitting diodes (IR-LEDs) and infrared sensors (or equivalent optical or acoustical means), which enable users to easily select other mobile radio transceivers equipped with optical wireless transceivers and to clearly and visibly (or acoustically) recognize which mobile radio transceiver has been selected.

### BRIEF DESCRIPTION OF THE PRESENT STATE OF THE ART

In order to understand the central idea and the context of the underlying invention, it is necessary to briefly describe the main features of conventional optical wireless transceivers and OW-LAN technology according to the state of the art and the applied standards.

The provision of multimedia data to mobile users has become a key area of research and product development. In indoor environments, the market for wireless communication systems is growing rapidly. In this connection, the majority of products comply with the IEEE 802.11 standards and operate in the 2.4-GHz unlicensed band of the radio frequency (RF) spectrum. In general, these systems offer data rates between 1 MBit/s and 11 MBit/s, depending on the respective implementation. For example, Bluetooth products operating in this band will offer networking at several megabits per second. The IEEE 802.11 standard also specifies networks operating at 54 MBit/s in the 5 GHz unlicensed band, while the High Performance Radio Local Area Network (HiperLAN) standards of the European Telecommunications Standards Institute (ETSI) offers up to 54 MBit/s in this region of the RF spectrum.

The IEEE 802.11b standard - an extension of the wired Ethernet developed by the Institute of Electrical and Electronics Engineers (IEEE), which is based on Direct Sequence Spread Spectrum (DSSS) modulation techniques and identifies how to implement wireless local area networking in the unlicensed 2.4-GHz band at a data rate of 11 MBit/s and a range of up to 100 m - especially refers to Wireless Local Area Network (WLAN) systems, Hotspot service, and wireless communication networks connecting mobile computing devices. By using WLAN systems, a user is able to connect his/her mobile computing device to other computers, modems, printers etc. without needing any wires. When said Hotspot service is applied, a user is able to connect his/her computer or PDA to the Internet at cafés, restaurants, railway stations, etc. Thereby, the employed wireless communication system can e.g. be implemented on a small television set.

### DEFICIENCIES AND DISADVANTAGES OF THE STATE OF THE ART

In spite of staggering technological breakthroughs which can be achieved when OW-LAN technology is deployed, FSOW systems also involve several problems, which shall be described in the following section:
- Since infrared radiation does not penetrate opaque objects such as walls, a system designer can not set up one single OW-LAN access point (synonymous with the base station of a cellular telephone system) which is able to support an entire building. Therefore, users basically need to be located within the same room as an access point in order to access the network.
- Ambient light introduces noise into the receiver. Fortunately, it is not difficult to reduce the effects of ambient light on system performance. In order to reduce the level of ambient light, a narrowband filter should be placed in front of the photodetector(s) used in the receiver.
- Likewise, light originating from halogen and incandescent lamps also introduces noise to the receiver. Unfortunately, it has been determined that halogen lamps inject a considerable amount of their spectral energy into the passband of the photodetector, even when daylight filters are used.
- Laser safety standards place limits on the amount of power that can be transmitted by a laser. According to the standard, indoor infrared transmissions must be class 1 eye-safe. This problem can be remedied by using visible light emitting diodes (LEDs). Since LEDs are not considered point sources, the image they place on the human retina is not highly focused. Therefore, higher power levels (which have to be class 1 eye-safe) may be transmitted.

In a conventional wireless communication scenario, a user is forced to look at a list of available mobile radio transceivers which are displayed on his/her mobile device when he/she wants to select a mobile target device for mobile communication. This is of course not convenient for the user. Furthermore, the display size of his/her mobile device must be large enough, which is impossible to implement on a small electronic device with a wireless communication function.

In the following, the main drawbacks involved with the use of conventional FSOW solutions according to the state of the art concerning the selection of mobile radio transceivers shall be explained in detail with the aid of two examples.

### Example #1:

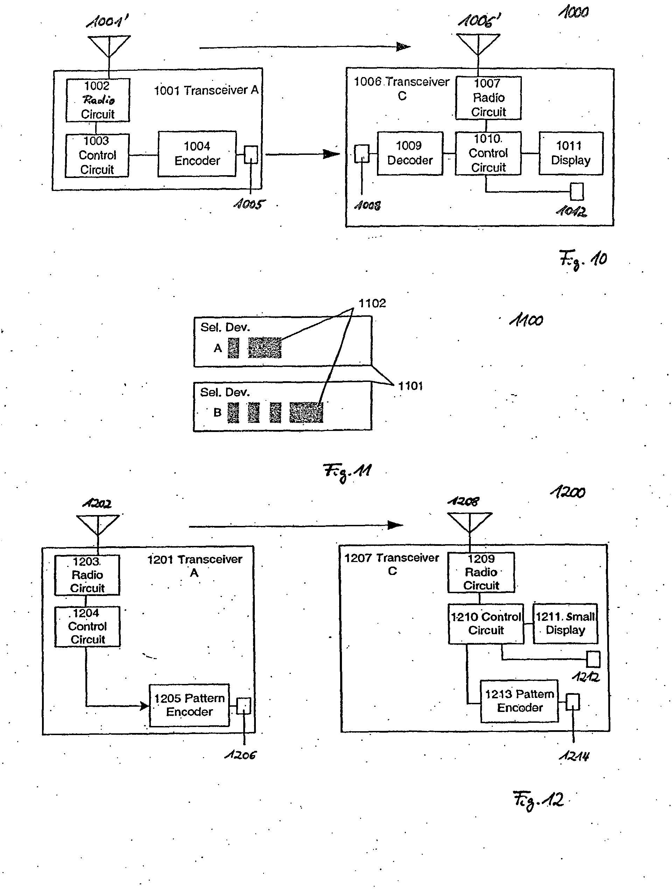

Fig. 9 presents a block diagram showing a communication scenario with two mobile radio transceivers of a conventional wireless system 900 according to the state of the art, which are realized as two mobile radio transceivers 901 (A) and 904 (C). Thereby, the first mobile radio transceiver 901 (A) comprises a radio circuit 902 and a control circuit 903. The second mobile radio transceiver 904 (C) comprises a radio circuit 905, a control unit 906, a display 907, and an input switch 908.

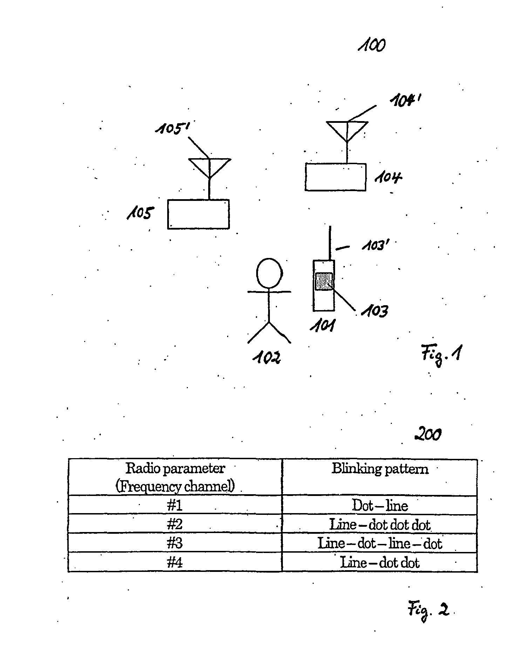

An overview diagram 100 showing an example of said communication scenario with said three portable mobile radio transceivers of the conventional wireless system 900 outlined in Fig. 9 is depicted in Fig. 1. In this scenario, a user 102 is the owner of a mobile radio transceiver 101 (C), and there are two other mobile radio transceivers 104 (A) and 105 (B). If the user 102 wants to connect his/her mobile radio transceiver 101 (C) only to the mobile radio transceiver 104 (A), he/she can select said mobile radio transceiver 104 (A) as follows:
(1) The user 102 switches on his/her mobile radio transceiver 101 (C), and then said mobile radio transceiver 101 (C) starts to search other available mobile target devices.
(2) His/her mobile radio transceiver 101 (C) finds two available mobile target devices, 104 (A) and 105 (B).
(3) His/her mobile radio transceiver 101 (C) indicates a list 1500 of available mobile radio transceivers on its display 103 as depicted in Fig. 2. In this example, said list 1500 shows the two mobile radio transceivers 104 (A) and 105 (B) as depicted in Fig. 1.
(4) The user 102 selects the mobile radio transceiver 104 (A) from the list 1500 on the display 103 of his/her mobile radio transceiver 101 (C).
(5) He/she can connect his/her mobile radio transceiver 101 (C) to the mobile target device 104 (A).

Accordingly, the user 102 can select the mobile radio transceiver 104 (A) as the desired target. In this case, however, the display 103 of his/her mobile radio transceiver 101 (C) must have enough size in order to show the list 1500. If his/ her mobile radio transceiver 101 (C) has enough size to implement such a large display 103, there is another problem. Even if the mobile radio transceiver 104 (A) is located just in front of the user 102, he/she has to select one of the mobile radio transceivers from the list 1500, because the mobile radio transceiver C (102) comprises an omni-directional antenna and finds all available mobile radio transceivers. This is quite inconvenient for the user 102.

### Example #2:

This example refers to a wireless communication system 1000 according to the underlying invention, which combines a mobile radio system and an optical wireless communication system in order to solve the problem of Example #1 described above (cf. Fig. 10). Thereby, the first mobile radio transceiver 1001 (A) comprises a radio circuit 1002, a control unit 1003, an encoder 1004 and an infrared light emitting diode 1005. The second mobile radio transceiver 1006 (C) comprises a radio circuit 1007, a decoder 1009, a control unit 1010, a display 1011, and an input switch 1012. In this connection, the encoder 1004 generates a blinking pattern signal for the infrared light emitting diode 1005 according to certain radio parameters (e.g. frequency, identifier of the respective mobile radio transceiver, the applied spreading code pattern, etc.). After the optoelectronic sensor 1008 has received the optical signal of the infrared light emitting diode 1005, the decoder 1009 decodes the optical signal, so that the control circuit 1010 can evaluate the radio parameters received from the radio circuit 1007 and the mobile radio transceivers 1001 (A) and 1006 (C) can start communication.

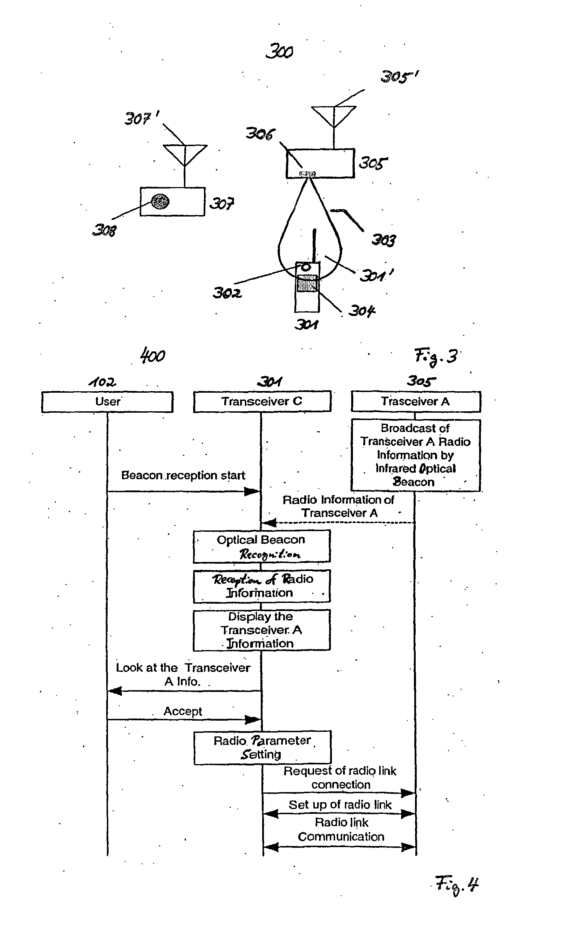

An overview diagram 300 showing an example of a communication scenario with three portable mobile radio transceivers 305 (A), 307 (B), and 301 (C) of a wireless communication system, each comprising an integrated optical wireless transceiver, which illustrates an example for the selection of a mobile radio transceiver, is depicted in Fig. 3. In this scenario, each of the mobile radio transceivers 305 (A) and 307 (B) comprises an optical beacon transmitter 306 and 308, respectively, and the mobile radio transceiver 301 (C) owned by the user comprises an optical beacon receiver 302, realized as an optoelectronic sensor. An optical beacon signal originating from the mobile radio transceiver 305 (A) contains said radio parameters. When the mobile radio transceiver 301 (C) of the user 102 has received said optical beacon signal, it decodes the radio parameters and starts to establish a radio link between the mobile radio transceivers 305 (A) and 301 (C). After that, when the optoelectronic sensor 302 has detected said optical beacon signal, the user 102 of the mobile radio transceiver 301 (C) is able to select the desired mobile target device 305 (A) by aiming at directional beam generated by the optical beacon transmitter 306 of the desired mobile target device 305 (A).

A sequence chart 400 associated with this embodiment of the underlying invention is depicted in Fig. 4. As can be taken from Fig. 4, the mobile radio transceiver 305 (A) broadcasts its radio parameters as an optical beacon signal, which is then recognized by the user 102 of the mobile radio transceiver 301 (C).

When a wireless communication system according to this embodiment of the underlying invention as described above is applied, the user 102 is able to easily select the mobile target device. However, he/she is not able to clearly recognize which mobile radio transceiver has been selected. If his/her mobile radio transceiver 301 (C) has a large-sized display, it can show the selected mobile radio transceiver 305 (A). But if the size of his/her mobile radio transceiver 301 (C) is too small to implement such a large display, the selected mobile radio transceiver can not be indicated.

### OBJECT OF THE UNDERLYING INVENTION

In view of the explanations mentioned above, it is the primary object of the underlying invention to provide a function that enables the user of a mobile radio transceiver without any large-sized display to clearly and easily recognize which mobile radio transceiver has been selected.

This object is achieved by means of the features of the independent claims. Advantageous features are defined in the subordinate claims. Further objects and advantages of the invention are disclosed in the following detailed description.

### BRIEF DESCRIPTION OF THE DRAWINGS

Further advantages and possible applications of the underlying invention result<A[result|show]> from the subordinate claims as well as from the following description<A[description|notation]> of two embodiments of the invention, which are depicted in the following drawings:
- Fig. 1: depicts an overview diagram showing an example of a first communication scenario with three portable mobile radio transceivers,
- Fig. 2: exhibits an example for a list of different radio parameters (here: frequency channels) and the associated blinking pattern indicating the respective radio parameters,
- Fig. 3: presents an overview diagram showing an example of a second communication scenario with three portable mobile radio transceivers each comprising an integrated optical wireless transceiver,
- Fig. 4: shows a sequence chart illustrating the signal flow between the user of a mobile radio transceiver, his/her mobile radio transceiver, and another mobile radio transceiver of the second communication scenario,
- Fig. 5: exhibits a block diagram showing the components of two mobile radio transceivers in a wireless communication system according to the underlying invention,
- Fig. 6: shows an example of a timing diagram for the blinking pattern of the visible light emitting diode of the user's mobile radio transceiver,
- Fig. 7: presents an overview diagram showing an example of a third communication scenario with three portable mobile radio transceivers, realized as optical wireless transceivers,
- Fig. 8: shows a sequence chart illustrating the signal flow between the user of a mobile radio transceiver, his/her mobile radio transceiver, and another mobile radio transceiver of the third communication scenario,
- Fig. 9: shows a block diagram of a known communication scenario,
- Fig. 10: shows a block diagram of another communication scenario,
- Fig. 11: shows another idea for realizing the blinking pattern indicating the respective radio parameters of the selected mobile radio transceiver on the small displays of the user's mobile radio transceiver,
- Fig. 12: depicts a block diagram showing the components of two mobile radio transceivers of a further communication scenario, realized as two mobile radio transceivers without any optical link,
- Fig. 13: presents an overview diagram showing an example of a fourth communication scenario according to the underlying invention with three portable mobile radio transceivers, realized as optical wireless transceivers,
- Fig. 14: shows a sequence chart illustrating the signal flow between the user of a mobile radio transceiver, his/her mobile radio transceiver, and another mobile radio transceiver of the fourth communication scenario, and
- Fig. 15: outlines a list of two available mobile target devices to which a connection from the mobile radio transceiver depicted in Fig. 1 can be established, displayed on the display of said mobile radio transceiver.

### DETAILED DESCRIPTION OF THE UNDERLYING INVENTION

The underlying invention provides a function which allows the user 102 of a mobile radio transceiver 508 (C) with an integrated optical wireless receiver 510 to clearly and easily recognize which mobile radio transceiver has been selected. For this purpose, any large-sized screen for displaying a list 200 of available mobile radio transceivers on the mobile radio transceiver 508 (C) of the user 102 is not required.

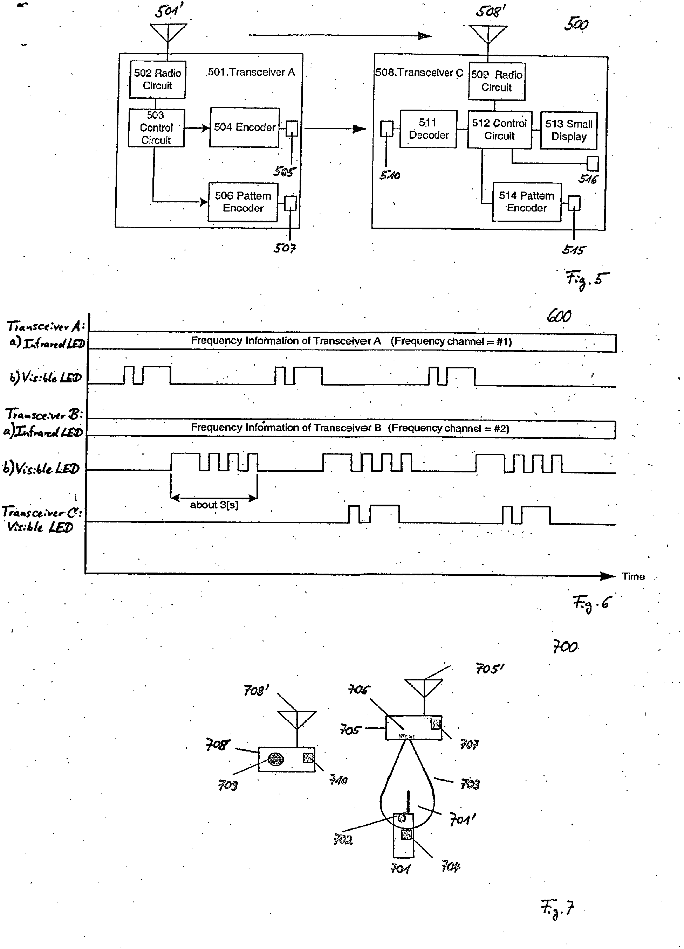

The first embodiment of the invention is depicted in Fig. 5, which shows a block diagram illustrating the components of two mobile radio transceivers 501 (A) and 508 (C) in a wireless communication system. Thereby, the first mobile radio transceiver 501 (A) comprises an integrated optical wireless transmitter 505, whereas the second mobile wireless transceiver 508 (C) owned by the respective user 102 comprises an integrated optical wireless receiver 510. A sequence chart 800 illustrating the interactions between said first mobile radio transceiver 501 (A) and said second mobile radio transceiver 508 (C) and the user 102 of said second mobile radio transceiver 508 (C) is depicted in Fig. 8.

According to one embodiment of the underlying invention, said first mobile radio transceiver 501 (A) additionally comprises a radio circuit 502, a control circuit 503, an encoder 504, an infrared light emitting diode 505 (IR-LED_{A}), a pattern encoder 506, and a visible light emitting diode 507 (LED_{A}), whereas said second mobile radio transceiver 508 (C) is further equipped with a radio circuit 509, an optoelectronic sensor 510, a decoder 511, a control circuit 512, a small display 513, a pattern encoder 514, a visible light emitting diode 515 (LED_{C}), and a switch 516. When the first mobile radio transceiver 501 (A) is switched on, its radio parameters are determined by the control circuit 503, encoded by the encoder 504 and broadcasted by its IR-LED 515. Furthermore, the pattern encoder 506 encodes the blinking pattern of its LED 507 (LED_{A}) according to the radio parameters, and said LED 507 blinks. If the user 102 of the second mobile radio transceiver 508 (C) wants to connect his/her device 508 (C) to the first mobile radio transceiver 501 (A), he/she switches it on. The optoelectronic sensor 510 then receives the infrared signal generated by the infrared light emitting diode 505 (IR-LED_{A}), the decoder 511 recognizes the received signal, and the control circuit 503 derives the radio parameters associated with said first mobile radio transceiver 501 (A). After that, the pattern encoder 514 encodes the blinking pattern of the visible light emitting diode 515 (LED_{C}) according to the received radio parameters, and said LED 515 blinks. If the user wants to connect his/her mobile radio transceiver 508 (C) to the desired target device 501 (A) by using the radio link, he/she pushes the switch 516. Then, the control circuit 512 sends the received radio parameters to the radio circuit 509 and starts to establish the radio connection between said mobile radio transceivers 501 (A) and 508 (C).

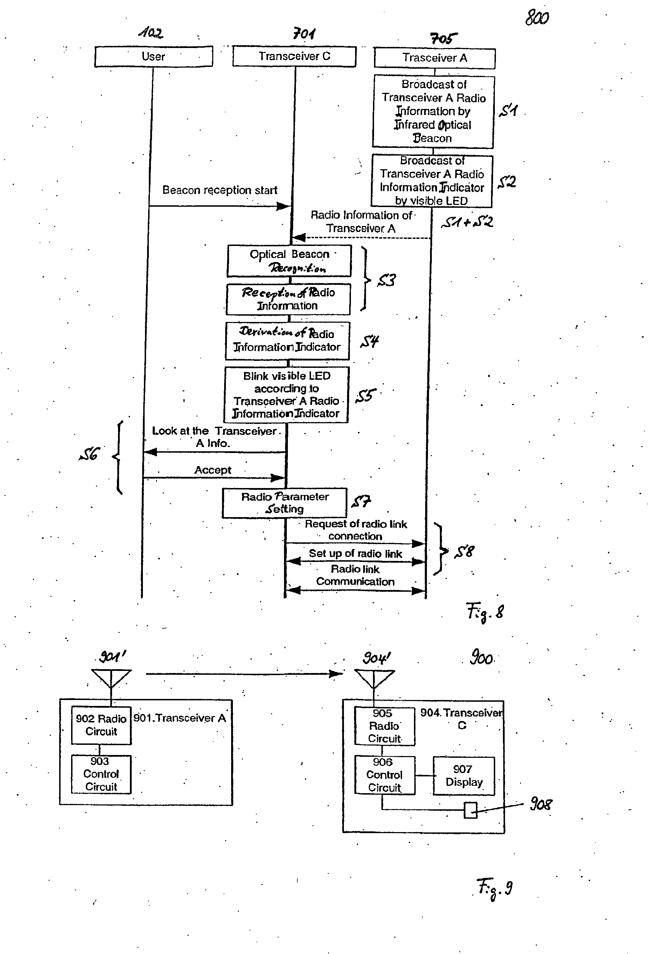

Fig. 7 presents an overview diagram 700 showing an example of a communication scenario with three portable mobile radio transceivers 705 (A), 708 (B), and 701 (C), realized as optical wireless transceivers, which illustrates an example for the selection of a mobile radio transceiver. In the depicted scenario 700, the user wants to connect his mobile radio transceiver 701 (C) with a target device - the mobile radio transceiver 705 (A). Thereby, the visible light emitting diodes 707 (LED_{A}) and 710 (LED_{B}) of the mobile radio transceivers 705 (A) and 708 (B) generate different blinking code patterns, whose difference can be recognized by the respective user 102. By using the directional beam pattern detected by the optoelectronic sensor 702, the user is then able to aim his/her mobile radio transceiver 701 (C) only at the desired target device 705 (A). Thereby, the visible light emitting diode 704 (LED_{C}) of his/her mobile radio transceiver 701 blinks with the same code pattern as the visible light emitting diode 707 (LED_{A}) of the target device 705 (A).

As depicted in Fig. 6, the rate of the blinking code pattern generated by the visible light emitting diode 704 (LED_{C}) of the mobile radio transceiver 701 (C) indicating the radio information of the respective transceivers 705 (A) and 708 (B) is slow, which allows the user 102 to easily recognize it. The length of a blinking code pattern is about 3 s. Thereby, the blinking patterns are defined according to the transmitted radio parameters. Fig. 2 shows an example 200 of these blinking patterns. In this example, the frequency channel of the first mobile radio transceiver 705 (A) is #1, encoded by the blinking pattern "dot-line", and the frequency channel of the second mobile radio transceiver 708 (B) is #2, encoded by the blinking pattern "line-dot-dot-dot". Therefore, as shown in Fig. 6, if the blinking pattern generated by the visible light emitting diode 704 (LED_{C}) of the mobile radio transceiver 701 (C) owned by the user 102 is "dot-line", said device is receiving the optical signal pattern generated by the optical beacon transmitter 706 of the first mobile radio transceiver 705 (A). After having recognized said signal, the user 102 knows the actually receiving target device - in this case, the mobile radio transceiver 705 (A) -, and can easily select said device 705 (A) without using any big display.

It should be noted that this method is only deployed when the target mobile radio transceiver is selected; once the radio link is established, the optical signal pattern is no longer required to keep up the radio link.

For the indication of the selected first mobile radio transceiver 501 (A), deploying visible light emitting diodes 507 (LED_{A}) and 515 (LED_{C}), as proposed in one embodiment of the underlying invention, is only one possible approach. Instead of using said visible light emitting diodes 507 (LED_{A}) or other visual signaling means and 515 (LED_{C}) as depicted in Fig. 5, buzzers or speakers or equivalent acoustical signaling means can also be used to recognize the selected first mobile radio transceiver 501 (A) by a specific sound pattern.

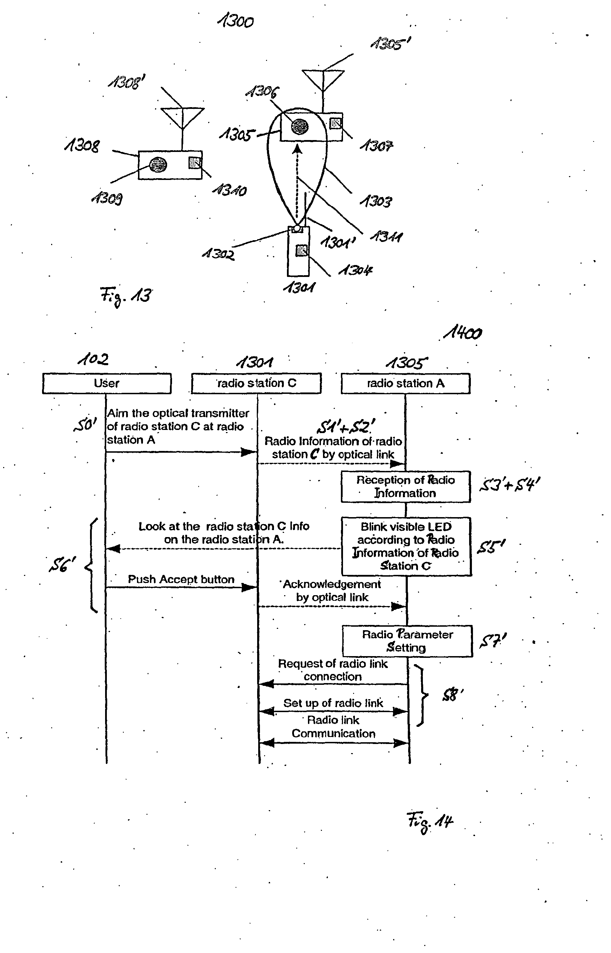

Likewise, any graphical pattern which can be displayed on a small screen 1101, e.g. a Liquid Crystal Display, can be applied (cf. Fig. 11). In the example depicted in Fig. 11, a small LDC display 1101 is implemented on a mobile radio transceiver 1006 (C) realizing the proposed approach according to the underlying invention. On this display 1101, the selected first mobile radio transceiver 1001 (A) is displayed as "dot-line" and a further mobile radio transceiver as "line-dot dot dot". Accordingly, the user 102 can recognize the selected first mobile radio transceiver 1001 (A) from his/her small display 1101.

As depicted in Fig. 12, the invention can also be used for a communication system without any optical beacon link. In this case, the first mobile radio transceiver 1201 (A) representing the desired target device is found by means of a radio signal, and the visible light emitting diode 1214 (LED_{C}) of the second mobile radio transceiver 1207 (C) indicates the selected first mobile radio transceiver 1201 (A). If the beam pattern of the TX/RX antenna 1208 of said second mobile radio transceiver 1207 (C) is directional, the user 102 of said second mobile radio transceiver 1207 (C) can also select the desired target device 1201 (A) by aiming the beam pattern of the TX/RX antenna 1208 at the selected first mobile radio transceiver 1201 (A).

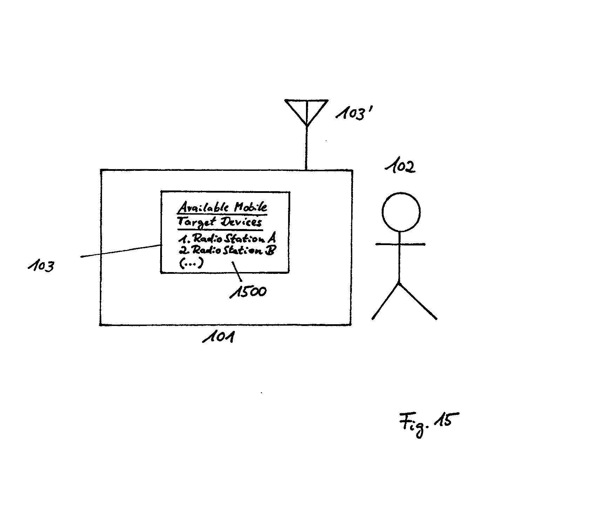

Furthermore, the underlying invention can also be implemented on a system comprising an optical link for requesting the radio connection from said second mobile radio transceiver 1301 (C) owned by a certain user 102 to said first mobile radio transceiver 1305 (A) instead of using an optical beacon signal which is directed from said first mobile radio transceiver 1305 (A) to said second mobile radio transceiver 1301 (C). Fig. 13 shows an example of such a communication scenario according to the underlying invention with three mobile radio transceivers 1305 (A), 1308 (B), and 1301 (C).

The associated sequence chart 1400 illustrating the signal flow between the user 102 of a mobile radio transceiver 1301 (C), his/her mobile radio transceiver 1301 (C), and another mobile radio transceiver 1305 (A) of this communication scenario 1300 is shown in Fig. 14.

According to this embodiment of the underlying invention, said mobile radio transceiver 1301 (C) comprises a visible light emitting diode 1304 (LED_{C}), which blinks according to the radio parameters of the mobile radio transceiver 1301 (C). If the user 102 wants to connect the radio link with mobile radio transceiver 1305 (A), he/she must aim the beam of his/ her optical beacon transmitter 1302 at the desired target device 1305 (A). The optical beacon transmitter 1302 of his/her mobile radio transceiver 1301 (C) then sends an optical signal pattern 1311 to the optical beacon receiver 1306 of the desired target device 1305 (A). After that, the mobile radio transceiver 1305 (A) receives said optical signal pattern 1311, and its visible light emitting diode 1307 (LED_{A}) generates a blinking code pattern. When the user of the mobile radio transceiver 1301 (C) is looking at the visible light emitting diode 1307 (LED_{A}), he/she can recognize its blinking code pattern and decide whether his/her mobile radio transceiver 1301 (C) shall select the mobile radio transceiver 1305 (A) as target device by comparing the blinking code pattern of the visible light emitting diodes 1307 (LED_{A}) and 1304 (LED_{C}) on the mobile radio transceivers 1305 (A) and 1301 (C). After having recognized said blinking codes, the user has to push the accept button on his/her mobile radio transceiver 1301 (C), and the mobile radio transceiver 1301 (C) then sends the acknowledgment signal over the optical link 1311. After that, the selected target device 1305 (A) receives the acknowledgment signal and sends a request message for the radio link connection and starts the radio link establishment. Accordingly, the user 102 gets to know which mobile radio transceiver has been selected as target device without using any display. In this connection, focusing the beam pattern of the optical transmitter 1302 is relatively easy.

In the following section, the main advantageous differences between the invention and conventional FSOW systems according to the state of the art shall briefly be emphasized.

By using mobile radio transceivers and executing a method for selecting and recognizing a first mobile radio transceiver 705 (A) by the user 102 of a second mobile radio transceiver 701 (C) in a wireless communication system 700 according to the underlying invention, said user 102 is enabled to select said first mobile radio transceiver 705 (A) by aiming the optical beacon receiver 702 of his/her mobile device 701 (C) at the directional beam generated by the optical beacon transmitter 706 of the selected target device 705 (A). In this connection, said user 102 does not need to select the desired target device 705 (A) on a list 1500 of available mobile radio transceivers. This is very convenient and easy. Furthermore, the user 102 can clearly and easily recognize which mobile radio transceiver has been selected by using said optical beacon link. If a mobile radio transceiver 708 (B) is not his/her desired target device, he/she can select the desired target device 705 (A) once again. To indicate the selected mobile radio transceiver 705 (A), there is no need to have any large-sized display on his/her mobile radio transceiver 701 (C). Therefore, the underlying invention can easily be implemented even on a small electronics device.

## Claims

1. A wireless communication system in a mobile network environment, which supports wireless communication by transferring modulated RF signals, the system comprising
- a mobile radio transceiver (705) of a first type comprising a) an optical beacon transmitter (706) broadcasting optical signals that contain encoded radio parameters characterizing said mobile radio transceiver (705) of said first type, and b) a visual and/or acoustical signaling means (707) which generates an acoustical and/or visual code serving as an indicator for the identification of said mobile radio transceiver (705) of said first type, and
- a mobile radio transceiver (701) of a second type comprising a) an optical beacon receiver (702) that receives said optical signals, decodes and evaluates said radio parameters, and b) at least one visual and/or acoustical signaling means (704) broadcasting a code which identifies said mobile radio transceiver (701) of said first type.

2. A wireless communication system according to claim 1,
**characterized in that**
the wireless communication system (700) is an optical wireless system comprising infrared light emitting diodes (706), photoresistors, photodiodes and/or phototransistors (702) serving as photoelectric actuators and sensors, respectively, designed to respectively transmit and receive infrared signals.

3. A wireless communication system according to anyone of the claims 1 or 2,
**characterized in that**
the wireless communication system (700) is an optical wireless system comprising laser diodes (706a), whose radiation is focused by means of optical lenses, photoresistors, photodiodes and/or phototransistors (702) serving as photoelectric actuators and sensors, respectively, designed to respectively transmit and receive focused laser signals.

4. A wireless communication system according to anyone of the preceding claims,
**characterized in that**
the acoustical and/or visual signaling means comprise visible light emitting diodes (707, 704).

5. A wireless communication system according to anyone of claims 1 to 3,
**characterized in that**
the acoustical and/or visual signaling means comprise graphical patterns on a display.

6. A wireless communication system according to anyone of the preceding claims,
**characterized in that**
the first and the second mobile radio transceiver (705, 701) respectively comprise beam forming antennas (705', 701') designed to generate and/or detect directional beam patterns.

7. A method for selecting and recognizing a first mobile radio transceiver (705) of a first type by the user (102) of a second mobile radio transceiver (701) of a second type,
**characterized by** the steps of
- selecting (S0 said first mobile radio transceiver (705) by manually directing an optical beacon receiver (702) of the second mobile radio transceiver (701) at a directional beam of an optical signal generated by an optical beacon transmitter (706) of the first mobile radio transceiver (705),
- transmitting (S1) an optical signal carrying the encoded radio parameters **characterizing said** first mobile radio transceiver (705) from said first mobile radio transceiver (705) to said second mobile radio transceiver (701),
- generating (S2) an acoustical and/or visual signal serving as an indicator for the identification of said first mobile radio transceiver (705),
- receiving (S3) the optical signal carrying said encoded radio parameters by the optical beacon receiver (702) of the second mobile radio transceiver (701) and evaluating (S4) said radio parameters,
- generating (S5) an acoustical and/or visual signal serving as an indicator for the identification of the first selected mobile radio transceiver (705) in order to indicate the selected first mobile radio transceiver (705),
- setting up (S7) said radio parameters on said second mobile radio transceiver (701), and
- establishing (S8) the wireless link between the two mobile radio transceivers (705 and 701).

8. A method according to claim 7,
**characterized in that**
the acoustical and/or visual signaling means comprise a light emitting diode (707) of the first mobile radio transceiver (705) starting blinking after having received the request message from the second mobile radio transceiver (701).

9. A method according to anyone of the claims 7 or 8,
**characterized in that**
the wireless communication link between the first and the second mobile radio transceiver (705, 701) is not disconnected even if the optical wireless link between the optical beacon transmitter (706) of the first mobile radio transceiver (705) and the optical beacon receiver (702) of the second mobile radio transceiver (701) is disconnected.

10. A wireless communication system in a mobile network environment, which supports wireless communication by transferring modulated RF signals, comprising
- at least one mobile radio transceiver (1305) of a first type comprising a) an optical beacon receiver (1306) that receives optical signal patterns, decodes and evaluates the encoded radio parameters transferred by means of said optical signal patterns, and b) at least one visible light emitting diode (1307) which generates a blinking code pattern serving as an indicator for the identification of said mobile radio transceiver (1305) of said second type, and
- at least one mobile radio transceiver (1301) of a second type comprising a) an optical beacon transmitter (1302) broadcasting optical signal patterns that contain encoded radio parameters **characterizing said** mobile radio transceiver (1301) of said second type, and b) at least one visible light emitting diode (1304) broadcasting a blinking code pattern which identifies said mobile radio transceiver (1301) of said second type.

11. A method for selecting and recognizing a first mobile radio transceiver (1305) of a first type by the user (102) of a second mobile radio transceiver (1301) of a second type in a wireless communication system (1300) according to claim 10,
**characterized by** the steps of
- selecting (S0') said first mobile radio transceiver (1305) representing the desired target device by manually aiming the optical beacon transmitter (1302) of the second mobile radio transceiver (1301) at the optical beacon receiver (1306) of the first mobile radio transceiver (1305),
- transmitting (S1') an optical signal pattern carrying the encoded radio parameters **characterizing said** second mobile radio transceiver (1301) from said second mobile radio transceiver (1301) to said first mobile radio transceiver (1305) over an optical link with the aid of the optical beacon transmitter (1302),
- generating (S2') a blinking optical signal pattern by means of the visible light emitting diode (1304) of the second mobile radio transceivers (1301), which serves as an indicator for the identification of said second mobile radio transceiver (1301),
- receiving (S3') the optical signal pattern carrying said encoded radio parameters over the optical link by the optical beacon receiver (1306) of the first mobile radio transceiver (1305) and evaluating (S4') said radio parameters,
- generating (S5') a blinking optical signal pattern serving as an indicator for the identification of the second mobile radio transceiver (1301) by means of the visible light emitting diode (1307) of the first mobile radio transceivers (1305) according to the code pattern received via said optical link in order to indicate the second mobile radio transceiver (1301),
- comparing (S6') the optical signal patterns generated by the blinking visible light emitting diodes (1304, 1307) of the two mobile radio transceivers (1301 and 1305),
- setting up (S7') said radio parameters on said first mobile radio transceiver (1305), and
- establishing (S8') the wireless link between the two mobile radio transceivers (1301 and 1305).

12. A method according to claim 11,
**characterized in that**
the visible light emitting diode (1304) of the second mobile radio transceiver (1301) starts blinking after having received the request message from the first mobile radio transceiver (1305).
